# EUROPÄISCHE PATENTANMELDUNG

(11) **EP 3 141 524 A1**
(43) Veröffentlichungstag der Anmeldung: **15.03.2017**
(21) Anmeldenummer: 15184225.9
(22) Anmeldetag: 08.09.2015
(51) Int. Cl.: C01B 17/36, H01M 10/39

(54) **TROCKNUNG VON POLYSULFIDEN IM MECHANISCH ERZEUGTEN WIRBELBETT**

(71) Anmelder: BASF SE, 67056 Ludwigshafen am Rhein (DE)
(72) Erfinder: Liebsch, Tillmann, 67071 Ludwigshafen (DE); Blasberg, Florian, 60389 Frankfurst (DE); Spielmann, Jan, 68199 Mannheim (DE); Adermann, Torben, 69115 Heidelberg, Germany (DE); Weiguny, Sabine, 67251 Freinsheim (DE)
(74) Vertreter: BASF IP Association

(57) **Zusammenfassung**

Die vorliegende Erfindung betrifft ein Verfahren zur Trocknung von lösungsmittelhaltigen Alkalimetallpolysulfiden der allgemeinen Formel Met₂Sₓ (I) worin Met Lithium, Natrium, Kalium, Rubidium, Cäsium und x eine Zahl im Bereich von 1,5 bis 10 bedeuten, indem man in einem Trocknungsreaktor mittels sich bewegender Rotorblätter aus einer trockenen Vorlage V, ausgewählt aus elementarem Schwefel, einem Alkalimetallpolysulfid der allgemeinen Formel (I), und inertem granulären Feststof ein mechanisch bewegtes Wirbelbett erzeugt, dieses auf eine Temperatur im Bereich von 50 bis 200 °C aufheizt und bei einem Druck im Bereich von 0,1 bis 1012 mbar unter Aufrechterhaltung des mechanisch bewegten Wirbelbetts das lösungsmittelhaltige Alkalimetallpolysulfid der allgemeinen Formel (I) zu dem mechanisch bewegten Wirbelbett durch einen Einlass des Trocknungsreaktors hinzugibt, die entstehenden gasförmigen Komponenten durch einen Gasauslass des Trocknungsreaktors abführt und das getrocknete Alkalimetallpolysulfid (I) durch einen Produktauslass des Trocknungsreaktors abführt, wobei die Temperatur im mechanisch bewegten Wirbelbett geringer ist als der Erweichungspunkt der Vorlage V oder deren Einzelkomponenten.

## Beschreibung

Die vorliegende Erfindung betrifft ein Verfahren zur Trocknung von lösungsmittelhaltigen Alkalimetallpolysulfiden der allgemeinen Formel Met₂Sₓ (I), trockene Alkalimetallpolysulfide der allgemeinen Formel Met₂Sₓ (I) sowie die Verwendung von trockenen Alkalimetallpolysulfiden der allgemeinen Formel Met₂Sₓ (I), jeweils wie in den Ansprüchen definiert.

Alkalimetallpolysulfide der allgemeinen Formel (I) sind bekannt. Die Verbindungen an sich, ihre physikalischen und chemischen Eigenschaften und Verfahren zu ihrer Herstellung sind beispielsweise in Ullmann's Encyclopedia of Industrial Chemistry, DOI: 0.1002/14356007.a25_443, Wiley-VCH Verlag GmbH & Co. KGaA, Weinheim 2012, Seiten 659-673, insbesondere Kapitel 3, beschrieben, hierin auch "Ullmann" genannt. Es sind sowohl wässrige oder lösungsmittelbasierte als auch wasserfreie Synthesewege für diese Polysulfide bekannt. Wässrige oder lösungsmittelbasierte Synthesewege führen hierbei in der Regel zu einem lösungsmittelhaltigen festen oder pastösen Reaktionsprodukt.

Es sind Verfahren und Vorrichtungen bekannt mit welchen in einem mechanisch bewegten Wirbelbett bei erhöhten Temperaturen feuchte feste oder pastöse Stoffe getrocknet werden können. In WO 2012/159736 A1 ist beispielsweise ein Trocknungsreaktor und -verfahren beschrieben welche nach der Methode der "Combi Fluidization"- Technologie® (CFT) arbeiten. Als derartige Trocknungsreaktoren werden auch sogenannte "Schaufeltrockner" verwendet und in der Literatur beschrieben beispielsweise in Friedrich Kneule "Das Trocknen", Verlag Sauerländer (1959), ASIN B0000BK9O4.

Bei den genannten Trocknungsmethoden oder-vorrichtungen besteht das Risiko, dass das zu trocknende feuchte Gut während des Trocknungsprozesses zusammenbacken kann und/oder Beläge in der Trocknungsapparatur bilden kann, was unerwünscht und wirtschaftlich und technisch nachteilig ist.

Alkalimetalpolysulfide können vorteilhaft in einer elektrochemischen Natrium-Schwefelzelle als Speichermedium zur reversiblen Aufnahme und Abgabe elektrischer Energie verwendet werden.

Der vorliegenden Erfindung liegt daher die Aufgabe zugrunde ein Verfahren zur Trocknung von lösungsmittelhaltigen Alkalimetallpolysulfiden der allgemeinen Formel Met₂Sₓ (I), zur Verfügung zu stellen, welches zu einem besonders trockenen, rieselfähigen Produkt mit guter Morphologie, insbesondere hoher Schüttdichte, führt und unter anderem vorteilhaft in einer elektrochemischen Natrium-Schwefelzelle verwendet werden kann.

Die Aufgabe wurde mit dem vorliegenden Verfahren, den vorliegenden Alkalimetallpolysulfiden der allgemeinen Formel Met₂Sₓ (I)und der vorliegenden Verwendung gelöst.

Alkalimetallpolysulfide der allgemeinen Formel Met₂Sₓ (I) sind gemäß vorliegender Erfindung solche worin Met Lithium, Natrium, Kalium, Rubidium, Cäsium, vorzugsweise Lithium, Natrium oder Kalium, besonders bevorzugt Lithium oder Natrium, insbesondere Natrium und x eine Zahl im Bereich von 1,5 bis 10, vorzugsweise 2 bis 6, besonders bevorzugt 3 bis 5, ganz besonders bevorzugt 3,5 bis 4,5 bedeuten. Polysulfide (I) können als Reinsubstanzen mit geradzahligem Index x = 2, 3, 4, 5 oder 6, vorzugsweise x = 4 vorliegen. Reine Polysulfide (I) mit unterschiedlichen geradzahligen Indizes x können aber auch untereinander als Mischung jeglichen Mischungsverhältnisses sowie in Kombination mit elementarem Schwefel und/oder Natriumsulfid Na₂S vorliegen, was dann zu Polysulfiden (I) mit gebrochenzahligem Index x führen kann. Die voranstehend beschriebenen Alkalimetalpolysulfide (I), inklusive aller Ausführungsformen, werden hierin auch kurz "Polysulfide (I)" genannt.

Beispielhaft seien folgende Polysulfide (I) genannt: Natriumdisulfid Na₂S₂, Natriumtrisulfid Na₂S₃, Natriumtetrasulfid Na₂S₄, Natriumpentasulfid Na₂S₅ sowie Mischungen aller oder eines Teils dieser Verbindungen.

Üblicherweise liegen die Polysulfide (I) lösungsmittelhaltig vor. Dies bedeutet hierin (a), dass die Polysulfide (I) eine untergeordnete Menge Lösungsmittel enthalten, üblicherweise in einer Menge im Bereich von 3 bis 15 Gew.-% bezogen auf das lösungsmittelhaltige Polysulfid (I), wobei das Polysulfid (I) dann beispielsweise pastös oder als Schlamm vorliegen kann oder bevorzugt (b), dass Polysulfide (I) und Lösungsmittel eine Suspension oder Lösung bilden, deren Gehalt an Polysulfid (I) im Bereich von 1 bis 60 Gew.-%, vorzugsweise im Bereich von 20 bis 40 Gew.-%, jeweils bezogen auf die Suspension oder Lösung liegt.

Als Lösungsmittel der lösungsmittelhaltigen Alkalimetallpolysulfide (I) sind grundsätzlich solche geeignet, welche polar sind und chemisch inert sind gegenüber den Edukten zur Bildung der Polysulfide (I), beispielsweise Alkali- oder Erdalkalimetallhydroxide oder Alkali- oder Erdalkalimetallalkoholate.

Beispiele für derartige Lösungsmittel sind (i) Wasser, (ii) die Klasse der Alkohole ROH, wobei R ein substituierter oder unsubstituierter, linearer, verzweigter oder cyclischer kohlenstofforganischer Rest mit 1 bis 15 Kohlenstoffatomen ist, vorzugsweise sind die Alkohole ROH ausgewählt aus gesättigten C₁- bis C₁₀-aliphatischen oder cycloaliphatischen Alkoholen, beispielsweise Methanol, Ethanol, n-Propanol, i-Propanol, n-Butanol, i-Butanol, s-Butanol, t-Butanol, n-Pentanol, n-Hexanol, cyclo-Hexanol, Ethylenglykol, Propylenglykol, besonders bevorzugt sind Methanol und Ethanol, wobei Mischungen von verschiedenen Alkoholen ROH mitumfasst sind, (iii) gesättigte und/oder aromatische C₅- bis C₁₀-Kohlenwasserstoffe allerdings nur in Kombination mit der Klasse der Alkohole, wie oben beschrieben.

Bevorzugt als Lösungsmittel ist Wasser sowie die Klasse der Alkohole ROH, wobei R ein substituierter oder unsubstituierter, linearer, verzweigter oder cyclischer kohlenstofforganischer Rest mit 1 bis 15 Kohlenstoffatomen ist, vorzugsweise sind die Alkohole ROH ausgewählt aus gesättigten C₁- bis C₁₀-aliphatischen oder cycloaliphatischen Alkoholen, beispielsweise Methanol, Ethanol, n-Propanol, i-Propanol, n-Butanol, i-Butanol, s-Butanol, t-Butanol, n-Pentanol, n-Hexanol, cyclo-Hexanol, besonders bevorzugt sind Methanol und Ethanol, wobei Mischungen von verschiedenen Alkoholen ROH untereinander sowie mit Wasser mitumfasst sind.

Die Polysulfide (I) können nach bekannten Verfahren hergestellt werden. Verfahren zur Herstellung von Polysulfiden (I) sind beispielsweise in Ullmann beschrieben. Gut geeignete Verfahren zur Herstellung von Polysulfiden (I) sind solche in welchen Lösungsmittel verwendet werden wie beispielsweise im Folgenden beschrieben.

### Herstellverfahren I

Ein gut geeignetes Verfahren zur Herstellung der Alkalimetallpolysulfide mit der allgemeinen Formel Met₂Sₓ (I) ist zunächst die Umsetzung von Schwefelwasserstoff H₂S mit dem Met-Rest in (I) entsprechenden Alkalimetallalkoholat MetOR welches üblicherweise im dem OR-Rest entsprechenden Alkohol ROH gelöst oder suspendiert ist zum Alklimetallsulfid Met₂S, wonach dann, im allgemeinen ohne Änderung des Lösungsmittels, die Umsetzung des gebildeten Alklimetallsulfid Met₂S mit der Menge Schwefel erfolgt, welche zur Erzielung des gewünschten Index x des Polysulfids (I) erforderlich ist. Met, OR, ROH haben die oben genannte Bedeutung, inklusive besonderer Ausführungsformen. Beispiele für die vorgenannte Umsetzung sind Schwefelwasserstoff (H₂S) + vorzugsweise zwei Äquivalente Natriummethanolat (NaOCH₃) in Methanol (CH₃OH) zum Natriumsulfid (Na₂S) und dessen anschließende Umsetzung mit eins, zwei, drei oder vier Äquivalenten Schwefel jeweils zu den Polysulfiden (I) Na₂S₂, Na₂S₃, Na₂S₄ oder Na₂S₅.

### Herstellvefahren II

Ein weiteres Verfahren zur Herstellung der Alkalimetallpolysulfide mit der allgemeinen Formel Met₂Sₓ (I) ist zunächst die Umsetzung von Schwefelwasserstoff (H₂S) mit der stöchiometrischen Menge eines Alkalimetallhydroxids (MetOH) welches üblicherweise in Wasser gelöst oder suspendiert ist zum Alklimetallsulfid (Met₂S), wonach dann, im allgemeinen ohne Änderung des Lösungsmittels, die Umsetzung des gebildeten Alklimetallsulfids (Met₂S) mit der Menge Schwefel erfolgt welche zur Erzielung des gewünschten Index x des Polysulfids (I) erforderlich ist. Met, hat die oben genannte Bedeutung. Beispiele für die vorgenannte Umsetzung sind Schwefelwasserstoff (H₂S) + vorzugsweise zwei Äquivalente Natriumhydroxid (NaOH) in Wasser zum Na₂S und dessen anschließende Umsetzung mit eins, zwei, drei oder vier Äquivalenten elementarem Schwefel jeweils zu den Polysulfiden (I) Na₂S₂, Na₂S₃, Na₂S₄ oder Na₂S₅.

Das lösungsmittelhaltige Polysulfid (I) wird in einem Trocknungsreaktor, der im Folgenden beschrieben wird, getrocknet.

Üblicherweise weist der Trocknungsreaktor ein einen Innenraum umschließendes, in der Regel zylindrisches Gehäuse, mit einer üblicherweise beheizbaren Innenwand, einen Einlass oder mehrere Einlässe für das zu trocknende Gut, üblicherweise in einem ersten Endbereich oder ersten Hälfte des Trocknungsreaktorgehäuses, einen Produktauslass für das getrocknete Produkt in einem üblicherweise dem ersten Endbereich axial gegenüberliegenden zweiten Endbereich des Gehäuses und einen Gasauslass für die gasförmige Komponenten, in der Regel Lösungsmitteldämpfe (auch "Brüden" genannt) im Trocknungsreaktorgehäuse auf. Der Innenraum des Trocknungsreaktors umfasst einen eine Wirbelschichtzone umfassenden Trocknungsraum. Im Innenraum des Trocknungsreaktors ist eine sich um ihre Achse drehend antreibbare Rotorwelle, üblicherweise coaxial und zentrisch angeordnet. An der Rotorwelle sind flächige Vorrichtungen, wie Blätter, Schaufeln oder dergleichen angebracht die üblicherweise als Rotorblätter oder auch als Rotorpaddel bezeichnet werden. Die Rotorwelle und/oder -blätter bzw.-paddel können auch beheizt werden.

Üblicherweise wirbeln die sich bewegenden Rotorblätter das zu trocknende Gut, in der Regel auch eine zuerst in den Trocknungsreaktor eingebrachte Vorlage, im Innenraum des Trocknungsreaktors auf und bilden so ein mechanisch bewegtes Wirbelbett. Im Allgemeinen fördern die sich bewegenden Rotorblätter auch das zu trocknende Gut von dessen Einlass zum Produktauslass.

Der Trocknungsreaktor, beispielsweise mit zylindrischem Gehäuse, ist üblicherweise praktisch horizontal angeordnet, kann aber auch von der horizontalen Stellung abweichend, bezüglich des Produktauslasses, nach oben oder nach unten geneigt sein.

Gut geeignete derartige Trocknungsreaktoren sind in der Fachwelt beispielsweise als Schaufeltrockner oder auch als Trockner mit mechanisch erzeugter Wirbelschicht bekannt, wobei letzterer Trocknertyp beispielsweise in WO 2012/159736 A1 beschrieben wird und beispielsweise von der Firma Buss-SMS-Canzler GmbH als CFT-Trockner® vertrieben wird (siehe beispielsweise Broschüre "CFT-Combi-Fluidization Technologie Trocknung mit System", pdf-Datei, Version vom 17.12.2013 Internetabruf bei http://www.sms-vt.com/fileadmin/Bilder_Daten/Down-loads/Brosch_ren/CFT-D.pdf am 25. Juni 2015). Der voranstehend beschriebene Trocknungsreaktor Schaufeltrockner bzw. Trockner mit mechanisch erzeugter Wirbelschicht, inklusive aller hierin beschriebenen Ausführungsformen, wird hierin auch als "erfindungsgemäßer Trocknungsreaktor" bezeichnet.

Der trockene Zustand eines nicht-gasförmigen Stoffes, vorzugsweisen festen Stoffes, ist hierin im Allgemeinen der Zustand, in welchem der betrachtete Stoff, üblicherweise bei Normalbedingungen, praktisch kein Suspendier- oder Lösungsmittel mehr enthält, vorzugsweise enthält der betrachtete Stoff in diesem Zustand weniger als 1 Gew.-%, besonders bevorzugt weniger als 0,5 Gew.-% Lösungs- oder Suspendiermittel, beispielsweise organische Lösungsmittel wie Alkohole und/oder Wasser. Der Lösungsmittel- oder Wassergehalt kann mit den hierfür üblichen analytischen Methoden bestimmt werden, zum Beispiel Karl Fischer-Methode beispielsweise nach der EN 13267 oder Gaschromatographie ("Headspace-GC"), letztere ist insbesondere für Alkohole geeignet.

Befüllung und Betrieb bzw. Produktentnahme des erfindungsgemäßen Trocknungsreaktors finden üblicherweise unter einer inerten Gasatmosphäre, beispielsweise aus Stickstoff oder Argon statt.

Üblicherweise wird in dem erfindungsgemäßen Trocknungsreaktor eine trockene Vorlage V ausgewählt aus elementarem Schwefel, einem Alkalimetallpolysulfid der allgemeinen Formel (I) und inertem granulären Feststoff, vorzugsweise elementarem Schwefel und/oder einem dem zu trocknenden Polysulfid (I) im wesentlichen identisches Polysulfid (I) vorgelegt, besonders bevorzugt dem zu trocknenden Polysulfid (I) im wesentlichen identisches Polysulfid (I) vorgelegt.

Als inerter granulärer Feststoff ist hierin zu verstehen ein unter den jeweiligen Trocknungsbedingungen, beispielsweise Druck und Temperatur, fester Stoff, der weder mit dem zu trocknenden Polysulfid (I) noch mit den produktberührten Teilen des Trocknungsreaktors chemisch reagiert und in Form von Granulat vorliegt. Gut geeignete inerte granuläre Feststoffe sind beispielsweise Aluminiumoxid, Zirkonoxid, Siliciumdioxid und Silikate jeweils in Form von Granulat.

Die Vorlage V füllt in der Regel 40 bis 85 Vol.-%, vorzugsweise 50 bis 75 Vol.-% des Innenraums des erfindungsgemäßen Trocknungsreaktors aus.

Das Einbringen der trockenen Vorlage V in den erfindungsgemäßen Trocknungsreaktor kann bei stehender oder sich bewegender Rotorwelle bzw. Rotorblättern stattfinden, vorzugsweise findet es bei sich mit geringer Umdrehungszahl, beispielsweise 10 Umdrehungen/min, drehenden Rotorwelle statt.

Üblicherweise dreht sich die Rotorwelle des erfindungsgemäßen Trocknungsreaktors bzw. deren Blätter oder Schaufeln im regulären Trocknungsbetrieb zur Aufrechterhaltung des mechanisch bewegten Wirbelbetts, also nicht während des An- oder Abfahrens, mit 50 bis 200 Umdrehungen/min, vorzugsweise 80 bis 120 Umdrehungen/min.

Vorzugsweise sobald aus der Vorlage V durch die sich bewegenden Rotorblätter im erfindungsgemäßen Trocknungsreaktor ein mechanisch bewegtes Wirbelbett erzeugt wurde, wird dieses, üblicherweise durch Beheizung der Innenwand und/oder der Rotorwelle und/oder-blätter bzw. -paddel des erfindungsgemäßen Trocknungsreaktors, auf eine Temperatur im Bereich von 50 bis 200 °C, vorzugsweise im Bereich von 60 bis 100 °C gebracht, wobei die Temperatur im mechanisch bewegten Wirbelbett geringer ist als der Erweichungspunkt der Vorlage V oder deren Einzelkomponenten.

Der Erweichungspunkt ist üblicherweise niedriger als der unter Normalbedingungen gemessene Schmelzpunkt der Vorlage V oder deren niedrigstschmelzenden Komponente und bezeichnet beispielsweise die Temperatur oder den Temperaturbereich bei welcher/welchem die Vorlage V anfängt sich zu verformen und zäh zu fließen - ohne dass sie schon vollständig in eine Schmelze übergegangen ist - und üblicherweise dabei klebrig wird. Der Erweichungspunkt lässt sich standardmäßig mit der Methode Dynamisch Mechanische Analyse "DMA" im Kompressionsmodus bestimmen. Es handelt sich dabei um die Bestimmung der mechanischen Erweichung. Geeignete Geräte hierfür werden im Handel angeboten, zum Beispiel von Mettler Toledo (http://de.mt.com/de/de/home/products/Laboratory_Analytics_Browse/TA_Family_Browse/DMA.html).

Der Erweichungspunkt, welcher auch als Glasübergangstemperatur (T_{G}) bezeichnet werden kann, der Vorlage V oder deren Komponenten, kann experimentell vor der Durchführung des erfindungsgemäßem Trocknungsverfahrens an einer Probe der Vorlage V oder deren Komponenten einfach, beispielsweise mit Methoden der Dynamisch Mechanischen Analyse (DMA, Kompressionsmodus) sowie der Dynamischen Differenzkalorimetrie (DSC) (für T_{G}) ermittelt werden.

Bevor oder sobald im Innenraum des erfindungsgemäßen Trocknungsreaktors das mechanisch erzeugte Wirbelbett der Vorlage V erzeugt wurde, wird darin ein Druck im Bereich von 0,1 bis 1012 mbar, vorzugsweise im Bereich von 10 bis 200 mbar eingestellt und üblicherweise während der Trocknungsperiode eingehalten. Beispielsweise hat sich für zu trocknendes methanolfeuchtes Natriumtetrasulfid Na₂S₄ ein Druck von 20 bis 200 mbar im Innenraum des erfindungsgemäßen Trocknungsreaktors als vorteilhaft herausgestellt.

Zu dem wie oben beschriebenen mechanisch erzeugten Wirbelbett aus der trockenen Vorlage V wird bei den oben beschriebenen Temperaturen und Drücken das oben beschriebene lösungsmittelhaltige Alkalimetallpolysulfid der allgemeinen Formel (I) durch einen Einlass oder mehrere Einlässe für das zu trocknende Gut, üblicherweise in der ersten Hälfte des Trocknungsreaktorgehäuses gelegen, beispielsweise durch Eintropfen oder Verdüsen hinzugegeben, so dass immer noch ein mechanisch bewegtes homogenes Wirbelbett erhalten bleibt, mit anderen Worten, dass die Bildung von Reaktorwandbelägen und/oder die Bildung von unerwünschten, beispielsweise brockenförmigen Agglomeraten, im mechanisch bewegten Wirbelbett mindestens weitestgehend vermieden wird.

Hierzu wird im allgemeinen der Verlauf des Drehmoments der sich im Trocknungsreaktorgehäuse um ihre Achse drehenden Rotorwelle über die Zeit überwacht und bei einem Anstieg des Drehmoments beispielsweise die Zugabemenge bzw. -rate des lösungsmittelhaltigen Alkalimetallpolysulfids der allgemeinen Formel (I) reduziert.

Bevorzugte lösungsmittelhaltige Polysulfide (I) sind Alkalimetallpolysulfide der allgemeinen Formel Met₂Sₓ (I) worin Met Lithium, Natrium oder Kalium, besonders bevorzugt Lithium oder Natrium, insbesondere Natrium bedeutet und x eine Zahl im Bereich von 2 bis 6, besonders bevorzugt 3 bis 5, ganz besonders bevorzugt 3,5 bis 4,5 bedeutet, wobei die lösungsmittelhaltigen Polysulfide (I) als Reinsubstanzen mit geradzahligem Index x = 2, 3, 4, 5 oder 6, vorzugsweise x = 4 vorliegen. Reine Polysulfide (I) mit unterschiedlichen geradzahligen Indizes x können aber auch untereinander als Mischung jeglichen Mischungsverhältnisses sowie in Kombination mit elementarem Schwefel und/oder Natriumsulfid Na₂S vorliegen, was dann zu Polysulfiden (I) mit gebrochenzahligem Index x führen kann. Die voranstehend beschriebenen lösungsmittelhaltigen Polysulfide (I) können, wie oben beschrieben, pastös oder als Schlamm aber auch, vorzugsweise, in Suspension oder Lösung, wie oben beschrieben, vorliegen.

Während des Trocknungsvorgangs entstehende gas- bzw. dampfförmige Komponenten, üblicherweise im Wesentlichen das verdampfende oben beschriebene Lösungsmittel, werden durch einen Gasauslass des Trocknungsreaktors, der sich üblicherweise quer zur Achse der Rotorwelle an der oberen Seite des Trocknungsreaktors befindet abgeführt. Diese, auch Brüden genannten gas- bzw. dampfförmigen Komponenten können dann mit den üblichen Methoden und Vorrichtungen kondensiert werden und/oder direkt weiterverwendet oder als Abgas entsorgt werden.

Das getrocknete Alkalimetetallpolysulfid (I) wird dann durch einen Produktauslass des Trocknungsreaktors abgeführt. Dieser Produktauslass ist üblicherweise in einem, dem ersten Endbereich axial gegenüberliegenden, zweiten Endbereich des Gehäuses des Trocknungsreaktors angeordnet.

Eine gut geeignete Austragsmethode, insbesondere für das kontinuierliche erfindungsgemäße Verfahren und insbesondere für oxidations- und/oder hydrolyseempfindliche Substanzen unter den Alkalimetallpolysulfiden (I), ist die inerte Ausschleusung, bei welcher das auszuschleusende Alkalimetallpolysulfid (I) über ein gasdichtes Schleusensystem vom Reaktorraum getrennt wird und das Alkalimetallpolysulfid (I) unter Inertatmosphäre, beispielsweise Stickstoff oder Argon, in ein geeignetes Gebinde, beispielsweise Stahlfass mit Aluminiuminliner, abgefüllt wird welches ebenfalls unter Inertatmosphäre steht.

Das erfindungsgemäße Verfahren kann sowohl kontinuierlich, als auch diskontinuierlich durchgeführt werden. Vorzugsweise wird es kontinuierlich durchgeführt.

Im Folgenden ist beispielshaft eine gut geeignete Ausführungsform des erfindungsgemäßen Verfahrens beschrieben.

Verfahren zur Trocknung von lösungsmittelhaltigen Alkalimetallpolysulfiden der allgemeinen Formel Met₂Sₓ (I) worin Met Lithium, Natrium oder Kalium, besonders bevorzugt Lithium oder Natrium, insbesondere Natrium bedeutet und x eine Zahl im Bereich von 2 bis 6, besonders bevorzugt 3 bis 5, ganz besonders bevorzugt 3,5 bis 4,5 bedeutet, wobei die lösungsmittelhaltigen Polysulfide (I) als Reinsubstanzen mit geradzahligem Index x = 2, 3, 4, 5 oder 6, vorzugsweise x = 4 vorliegen. Reine Polysulfide (I) mit unterschiedlichen geradzahligen Indizes x können aber auch untereinander als Mischung jeglichen Mischungsverhältnisses sowie in Kombination mit elementarem Schwefel und/oder Natriumsulfid Na₂S vorliegen, was dann zu Polysulfiden (I) mit gebrochenzahligem Index x führen kann.

Die voranstehend beschriebenen lösungsmittelhaltigen Polysulfide (I) können wie oben beschrieben pastös oder als Schlamm aber auch, vorzugsweise, in Suspension oder Lösung, wie oben beschrieben, vorliegen. In einem Trocknungsreaktor, vorzugsweise einem Schaufeltrockner oder CFT-Trockner wird mittels sich bewegender Rotorblätter aus einer trockenen Vorlage V, ausgewählt aus elementarem Schwefel und/oder dem zum trocknenden lösungsmittelhaltigen Polysulfid (I) im Wesentlichen identischen trockenen Polysulfid (I) ein mechanisch bewegtes Wirbelbett erzeugt, dieses wird auf eine Temperatur im Bereich von 60 bis 100 °C aufgeheizt und bei einem Druck im Bereich von 20 bis 200 mbar, unter Aufrechterhaltung des mechanisch bewegten Wirbelbetts, wird das lösungsmittelhaltige Alkalimetallpolysulfid der allgemeinen Formel (I) zu dem mechanisch bewegten Wirbelbett durch einen Einlass des Trocknungsreaktors hinzugegeben, die entstehenden gasförmigen Komponenten werden durch einen Gasauslass des Trocknungsreaktors abgeführt und das getrocknete Alkalimetallpolysulfid (I) wird durch einen Produktauslass des Trocknungsreaktors abgeführt, wobei die Temperatur im mechanisch bewegten Wirbelbett geringer ist als der Erweichungspunkt der Vorlage V oder deren Einzelkomponenten und wobei jeweils das Lösungsmittel ausgewählt wird aus Wasser sowie der Klasse der Alkohole ROH, wobei R ein substituierter oder unsubstituierter, linearer, verzweigter oder cyclischer kohlenstofforganischer Rest mit 1 bis 15 Kohlenstoffatomen ist, vorzugsweise sind die Alkohole ROH ausgewählt aus gesättigten C₁- bis C₁₀-aliphatischen oder cycloaliphatischen Alkoholen, beispielsweise Methanol, Ethanol, n-Propanol, i-Propanol, n-Butanol, i-Butanol, s-Butanol, t-Butanol, n-Pentanol, n-Hexanol, cyclo-Hexanol, besonders bevorzugt sind Methanol und Ethanol, wobei Mischungen von verschiedenen Alkoholen ROH untereinander sowie mit Wasser mitumfasst sind und wobei das lösungsmittelhaltige Polysulfid (I) nach dem oben beschriebenen Herstellverfahren I erhältlich ist.

Das getrocknete Alkalimetallpolysulfid (I) ist in der Regel gut rieselfähig und hat vorzugsweise eine Schüttdichte im Bereich von 0,7 bis 2,5 kg/l, besonders bevorzugt im Bereich von 1,2 bis 2,0 kg/l, bestimmt wie in den Beispielen beschrieben. Das getrocknete Alkalimetallpolysulfid (I) ist darüber hinaus in der Regel praktisch staubfrei.

Das mit dem erfindungsgemäßen Verfahren erhältliche, trockene Alkalimetallpolysulfid (I) kann beispielsweise in einer elektrochemischen Natrium-Schwefel-Zelle verwendet werden. Beispielsweise kann ein Halbraum der Zelle, der bei der Entladung der Natrium-Schwefelzelle als Kathodenraum bezeichnet wird, und der üblicherweise mit einem keramischen Festelektrolyt vom anderen Halbraum der Zelle getrennt ist, mit dem trockenen Alkalimetallpolysulfid (I) befüllt werden und dieses dann mittels an die Zelle angelegten elektrischen Stroms in die Bestandteile elementares Natrium und elementarer Schwefel zerlegt werden, die dann das Kathodenmaterial und Anodenmaterial der elektrochemischen Natrium-Schwefelzelle bilden.

### Beispiele

Die Schüttdichte des getrockneten Alkalimetallpolysulfids (I) wurde wie folgt gemessen: Das Volumen einer genau abgewogenen Menge Substanz wurde mittels Messzylinder bestimmt und der Quotient aus Masse pro Volumen daraus ermittelt.

### Beispiel 1:

Synthese der Lösung von Natriumtetrasulfid Na₂S₄ in Methanol CH₃OH

2 NaOCH₃⁺ H₂S → Na₂S⁺ 2 CH₃OH

Na₂S ⁺ 3/8S₈ → Na₂S₄

Natriummethylat (NaOCH₃ 30 Gew.-% in Methanol, 954 g) wurde unter Argon in einem 0,75 I Doppelmantelreaktionsgefäß mit Strömungsstörern vorgelegt. Innerhalb von 90 min wurde Schwefelwasserstoff (H₂S, 90,3 g) bei 22 °C Innentemperatur so in die Lösung dosiert, dass kein Gas durchschlug, dabei stieg die Temperatur auf 32 °C an. Danach wurde die Reaktionslösung auf ca. 50 °C erwärmt und innerhalb von 40 min in zwei Portionen Schwefel zudosiert (254 g), wobei die Mischung sich dunkelrot bis schwarz verfärbte. Der Ansatz wurde zum Rückfluss erhitzt und für 4 h bei dieser Temperatur gerührt. Die erhaltene Lösung enthielt 35 Gew-% Na₂S₄.

### Beispiel 2

### Trocknung einer Lösung von Natriumtetrasulfid Na₂S₄ in Methanol in einem CFT-Trockner der Firma Buss SMS Crantzler

Die methanolische Na₂S₄ Lösung (35 Gew.-% Na₂S₄ in MeOH) hergestellt wie in Beispiel 1 beschrieben wurde in einem horizontalen CFT Trockner der Firma Buss-SMS-Cranzler GmbH auf eine Restfeuchte kleiner 1 Gew.-% Methanol getrocknet. Die Wirbelschicht in dem ca 100 I großen horizontal liegenden Innenraum wird mechanisch durch ein rotierendes Schaufelwerk erzeugt.

Befüllung, Betrieb und Produktentnahme des CFT-Trockners wurden unter einer Atmosphäre von trockenem Stickstoff durchgeführt.

Es wurden 70 kg trockenes Natriumtetrasulfid (Na₂S₄) in dem Trocknerinnenraum vorgelegt wobei dieser zu ca. 60 Vol.-% ausgefüllt wurde, dann wurde der Trockner verschlossen und ein stabiles Wirbelbett durch Rotation der Rotorblätter bei 110 Umdrehungen/Minute aufgebaut. Bei einer Manteltemperatur des Trocknungsreaktors von 100 bis 115 °C und einem Druck im Trocknerinnenraum von 50 bis 100 mbar (Restdruck Stickstoff) wurde die methanolische Na₂S₄-Lösung (35 Gew.-% Na₂S₄) mit einer Exzenterschneckenpumpe bei einem Volumenstrom von ca. 100 l/h zugegeben wobei die Innentemperatur im Trocknungsreaktor zwischen 45 und 57 °C variierte. Das verdampfte Methanol wurde über einen Brüdendom abgeführt, durch Feststofffilter geleitet und in einem Kühler kondensiert und kann wieder verwendet werden. Insgesamt wurden ca. 700 kg Produkt getrocknet. Das getrocknete Produkt wurde durch einen Produktaustragsstutzen als gelb-roter Feststoff kontinuierlich aus dem Trockner über eine Schleuse in ein mit Stickstoff inertisiertes Fass ausgetragen. Das Produkt hat hierbei eine Schüttdichte von 1,25 kg/l und ist sowohl staubarm, als auch frei fließfähig. Mit einer Partikelgröße von bis zu 2 mm konnten homogene und sphärische Granulate hergestellt werden.

### Beispiel 3

In einem im Folgenden beschriebenen Vakuum-Schaufeltrockner (Eigenbau BASF SE) mit einem Innenvolumen von 5 I wurde eine 35 Gew.-%ige Lösung von Natriumtetrasulfid Na₂S₄ in Methanol, die gemäß Beispiel 1 erhalten wurde, getrocknet.

Der hierzu genutzte Vakuum-Schaufeltrockner wird wie folgt beschrieben: Es handelte sich um einen zylindrischen, waagrecht liegenden Trocknungsreaktor mit einem Nutzvolumen von 5 I mit konzentrischer coaxialer Rotationswelle mit Schaufeln, weiterhin mit Produkteinfüllstutzen und Produktauslass am vorderen Kopfende sowie einem Auslass für gasförmige/dampfförmige Substanzen mit aufgesetzten Brüdendom und Kondensatfalle in der Mitte des Reaktorraums, wobei die Reaktorwand (0,184 m²) und die Rotationswelle über ein System mit Dampf (12 bar) beheizbar sind.

Befüllung, Betrieb und Produktentnahme des Schaufeltrockners wurden unter einer Atmosphäre von trockenem Argon durchgeführt.

Als Vorlage wurde der Reaktorraum zu 70 Vol.-% mit einem trockenen Gemisch aus 75 Gew.-% Schwefel und 25 Gew.-% Na₂S₄-Granulat befüllt und im Reaktorraum ein Druck von 100 mbar und eine Temperatur von ca. 55 °C eingestellt.

Nach Verschließen des Trockners und mehrfachen Evakuieren seines Innenraumes mittels Argon, wurde die Rotationswelle mit ca. 80 Umdrehungen/Minute betrieben, wodurch ein stabiles Wirbelbett erreicht wurde. In dieses Wirbelbett wurden bei einem Volumenstrom von ca. 2,5 l/h der 35 Gew.-%ige Lösung von Natriumtetrasulfid Na₂S₄ in Methanol mittig von oben in den Reaktorraum hineingetropft. Der so vollzogene Granulationsprozess führte zu einer Erhöhung des Füllgrades im Trockner. Um diesen jedoch bei ca. 50 Vol.-% konstant zu halten, wurden regelmäßig, definierte Mengen getrocknenten Produkts aus dem Innenraum in ein mit Argon gefülltes Glasgebinde abgelassen. Diese Ausschleusung wurde sowohl kontinuierlich, als auch diskontinuierlich betrieben. Hierzu diente ein Austragsstutzen, welcher mittels zweier mit Argon gespülter Kugelhähne, den Innenraum des Trockners von dem Gebinde abgrenzte.

Auf diese Weise konnten 45 kg Na₂S₄ als Granulat mit einer hohen Schüttdichte von 1,25 kg/l und geringen Feuchtigkeit von weniger als 1 Gew.-% Lösungsmittelgehalt, bezogen auf die Gesamtmasse des getrocknete Na₂S₄ als Granulats, und in hoher Reinheit hergestellt werden.

## Patentansprüche

1. Verfahren zur Trocknung von lösungsmittelhaltigen Alkalimetallpolysulfiden der allgemeinen Formel Met₂Sₓ (I) worin Met Lithium, Natrium, Kalium, Rubidium, Cäsium und x eine Zahl im Bereich von 1,5 bis 10 bedeuten, indem man in einem Trocknungsreaktor mittels sich bewegender Rotorblätter aus einer trockenen Vorlage V, ausgewählt aus elementarem Schwefel, einem Alkalimetallpolysulfid der allgemeinen Formel (I), und inertem granulären Feststoff ein mechanisch bewegtes Wirbelbett erzeugt, dieses auf eine Temperatur im Bereich von 50 bis 200 °C aufheizt und bei einem Druck im Bereich von 0,1 bis 1012 mbar unter Aufrechterhaltung des mechanisch bewegten Wirbelbetts das lösungsmittelhaltige Alkalimetallpolysulfid der allgemeinen Formel (I) zu dem mechanisch bewegten Wirbelbett durch einen Einlass des Trocknungsreaktors hinzugibt, die entstehenden gasförmigen Komponenten durch einen Gasauslass des Trocknungsreaktors abführt und das getrocknete Alkalimetallpolysulfid (I) durch einen Produktauslass des Trocknungsreaktors abführt, wobei die Temperatur im mechanisch bewegten Wirbelbett geringer ist als der Erweichungspunkt der Vorlage V oder deren Einzelkomponenten.

2. Verfahren nach Anspruch 1, wobei der Trocknungsreaktor ein Schaufeltrockner oder ein Trockner mit mechanisch erzeugter Wirbelschicht ist.

3. Verfahren nach den Ansprüchen 1 bis 2, wobei die Vorlage V ein Alkalimetallpolysulfid (I) ist, dessen Zusammensetzung im Wesentlichen identisch ist mit dem zu trocknenden Alkalimetallpolysulfid (I).

4. Verfahren nach den Ansprüchen 1 bis 3, wobei das Lösungsmittel ausgewählt wird aus der Klasse der Alkohole ROH, wobei R ein substituierter oder unsubstituierter, linearer, verzweigter oder cyclischer kohlenstofforganischer Rest mit 1 bis 15 Kohlenstoffatomen ist sowie Wasser.

5. Verfahren nach den Ansprüchen 1 bis 4, wobei das Verfahren kontinuierlich ausgeführt wird.

6. Trockene Alkalimetallpolysulfide der allgemeinen Formel Met₂Sₓ (I) worin Met Lithium, Natrium, Kalium, Rubidium, Cäsium und x eine Zahl im Bereich von 1,5 bis 10 bedeuten, erhältlich nach einem Verfahren wie in den Ansprüchen 1 bis 5 definiert.

7. Trockene Alkalimetallpolysulfide der allgemeinen Formel Met₂Sₓ (I), gemäß Anspruch 6, **dadurch gekennzeichnet, dass** sie eine Schüttdichte im Bereich von 0,7 bis 2,5 kg/l haben.

8. Verwendung von trockenen Alkalimetallpolysulfiden der allgemeinen Formel Met₂Sₓ (I) wie in Anspruch 6 bis 7 definiert in einer elektrochemischen Natrium-Schwefel-Zelle.
